# EUROPEAN PATENT SPECIFICATION

(11) **EP 2 772 141 B1**
(45) Date of publication and mention of the grant of the patent: **23.05.2018**
(21) Application number: 13717408.2
(22) Date of filing: 22.02.2013
(51) Int. Cl.: A23L 2/60, A23L 29/30

(54) **LIQUID SWEETENER COMPOSITION**
FLÜSSIGE SÜSSSTOFFZUSAMMENSETZUNG
COMPOSITION ÉDULCORANTE LIQUIDE

(30) Priority: 26.12.2012 JP 2012283377
(43) Date of publication of application: 03.09.2014
(73) Proprietor: Japan Corn Starch Co., Ltd., Tokyo 107-0052 (JP)
(72) Inventor: HASHIMOTO, Kazuki, Hekinan-shi Aichi 447-8608 (JP)
(74) Representative: Wakerley, Helen Rachael
(86) International application number: PCT/JP2013/054485
(87) International publication number: WO 2014/103349

(56) References cited:
- WO-A1-00/24273
- WO-A1-2011/152370
- WO-A2-2005/009148
- FR-A1- 2 766 333
- JP-A- 2009 254 242
- JP-A- 2011 045 305
- JP-A- 2012 000 032
- 'Shokuhin'yo Sozai (Toka Seihin' SEIHIN JOHO XP008171735 Retrieved from the Internet: <URL:http://www.nisshoku.co.jp/ product/food/saccharify/index.html> [retrieved on 2013-04-26]

## Description

### [Technical field]

This invention relates to a liquid sweetener composition that reproduces sweetness and sharpness equivalent to high-fructose syrup with 90% or more fructose content. It also relates to beverages using this liquid sweetener composition, particularly soft drinks, sports drinks and carbonated drinks.

### [Background art]

Shortage of isomerized sugar syrup, or fructose, as the ingredient in soft drinks, has been a concern in recent years, due to increased shipments of soft drinks as well as increased demand of soft drinks for rehydration in the summertime.
isomerized sugar syrup includes glucose-fructose syrup, fructose-glucose syrup and high-fructose syrup, while many soft drinks use fructose-glucose syrup as the ingredient. Thus, stable supply of these types of syrup is important when heavy demand is expected in the summertime for example.

High fructose syrups are disclosed in e.g. JP2009/254242 and FR2766333, and beverages sweetened with high fructose corn syrup in e.g. WO2005/009148.

There are two ways to produce fructose-glucose syrup: (1) a production method to increase the fructose content to 55% using the isomerization process with liquid glucose as the ingredient and (2) a production method to blend glucose-fructose syrup with 42% fructose content and high-fructose syrup with 90% or more fructose content using the isomerization process.

In the case of using the production method (2) stated above, high-fructose syrup is essential in the production of fructose-glucose syrup; therefore the problem is that an increase in the supply of high-fructose syrup will make it difficult to stably supply fructose-glucose syrup.

Fructose is carbohydrate that brings strong sweetness at a low temperature. In terms of the pattern of sweetness, it also has a characteristic to bring sweetness and sharpness earlier than sugar. Therefore, fructose is considered to be very suitable as an ingredient in soft drinks that bring a cool sensation at a low temperature.

### [Brief summary of the invention]

### [Problem to be solved by the invention]

The problem in this invention is to provide a liquid sweetener composition that can reproduce the quality of sweetness and sharpness equivalent to high-fructose syrup while reducing the blending ratio of fructose, and to provide soft drinks that use the liquid sweetener, composition, especially sports drinks.

### [Means for solving the problem]

The inventors zealously studied the issues of existing technology to solve the above problem and discovered that a liquid sweetener composition containing 65% or more and 85% or less fructose, 5% or more and 35% or less glucose and 1% or more and 10% or less reducing sugar other than fructose and glucose in terms of weight ratio (anhydrous basis) with 10 to 30 weight percent of water content has sweetness and sharpness equivalent to a liquid sweetener composition containing 90% or more fructose content, leading to completion of this invention. It was also found out that beverages, particularly soft drinks and sports drinks, with refreshing and tasty sweetness can be provided by using the liquid sweetener composition in this invention. The effect to be able to add richness was further found out in the case that a high-intensity sweetener is simultaneously used.

Therefore, this invention provides the following liquid sweetener compositions:
[1] Liquid sweetener composition that satisfies (1) and (2) in the following:
   (1) contains 67.5% or more and 77.5% or less fructose, 10% or more and 35% or less glucose, and 1% or more and 5% or less reducing sugar other than fructose and glucose in terms of weight ratio (anhydrous basis), wherein the reducing sugar other than fructose and glucose is selected from maltose, maltotriose and maltotetraose;
   (2) contains 15 to 30 weight percent of water content.
[2] Soft drinks that contain 0.1% to 10% liquid sweetener composition as a solid content described in [1] above.
[3] Sports drinks that contain 0.1% to 10% liquid sweetener composition as a solid content described in [1] above.
[4] Carbonated drinks that contain 0.1% to 10% liquid sweetener composition as a solid content described in [1] above.
[5] Soft drinks described in [2] in the above that additionally contain 0.001 to 0.007 weight percent of high-intensity sweetener.
[6] Sports drinks described in [3] in the above that additionally contain 0.001 to 0.007 weight percent of high-intensity sweetener.
[7] Carbonated drinks described in [4] in the above that additionally contain 0.001 to 0.007 weight percent of high intensity sweetener.

### [Advantageous effect of the invention]

This invention can provide a liquid sweetener composition with good quality of sweetness that reproduces the quality of sweetness and sharpness equivalent to high-fructose syrup. Stable supply of fructose-glucose syrup is also possible with reduced usage of high-fructose syrup by supplying the liquid sweetener composition in this invention in place of high-fructose syrup during the period when isomerized sugar syrup is in heavy demand such as summertime.

In addition, since the liquid sweetener composition in this invention reproduces sweetness and sharpness equivalent to high-fructose syrup with 90% or more fructose content, it has the benefit of significant cost reduction while maintaining the equivalent quality of sweetness and sharpness even if the same amount as the high-fructose syrup is added to the final products such as soft drinks and sports drinks. Another benefit is that richness can be added in the case that high-intensity sweetener is simultaneously used.

### [Mode for carrying out the invention]

The "liquid sweetener composition" in this invention means a composition containing 67.5% or more and 77.5% or less fructose, 10% or more and 35% or less glucose, and 1% or more and 5% or less reducing sugar other than fructose and glucose selected from maltose, maltotriose and maltotetraose in terms of weight ratio (anhydrous basis) with 15 to 30 weight percent of water content.

The "liquid sweetener composition" in this invention has the sweetness and sharpness equivalent to high-fructose syrup with 90% or more fructose. For a "liquid sweetener composition," sweetness and sharpness is not sufficient if fructose is less than 65% and significant cost reduction is not possible if exceeding 85%. Richness is not sufficient if glucose is less than 5% and sharpness is not sufficient if exceeding 35%.

The "reducing sugar other than fructose and glucose" in this case means the reducing sugar other than fructose and glucose stipulated in JAS by the Japanese Agricultural Standards Association (JAS), selected from maltose, maltotriose and maltotetraose.

Furthermore, it is preferable for the "liquid sweetener composition" in this invention to contain 67.5% or more and less than 77.5% fructose, 10% or more and 35% or less glucose, and 1% or more and 5% or less reducing sugar other than fructose and glucose in terms of weight ratio (anhydrous basis) with 15 to 30 weight percent of water content.

To produce the "liquid sweetener composition" in this invention, ingredients of fructose can be isomerized sugar syrup such as glucose-fructose syrup, fructose-glucose syrup and high-fructose syrup, or a dissolved form of crystalline fructose. It is acceptable to use one of them or combine two or more for ingredients.

Ingredients of glucose can be isomerized glucose syrup, starch syrup, a liquid form of dissolved crystalline glucose, etc. It is acceptable to use one of them or combine two or more for ingredients.

"Soft drinks" in this invention mean a liquid for drinking with less than 1% alcohol content with flavor and fragrance, and desirably contain 0.1% to 10% "liquid sweetener composition" in this invention as a solid content and have the quality of sweetness and sharpness equivalent to soft drinks containing 0.1% to 10% high-fructose syrup as a solid content with 90% or more fructose.

"Sports drinks" in this invention mean beverages with a purpose to effectively replenish water and mineral lost from a body due to sweating, etc., and desirably contain 0.1% to 10% "liquid sweetener composition" in this invention as a solid content and have the quality of sweetness and sharpness equivalent to sports drinks containing 0.1% to 10% high-fructose syrup as a solid content with 90% or more fructose.

Furthermore, "carbonated drinks" in this invention mean beverages where carbon dioxide is pressed into water suitable for drinking, including those with sweeteners, acidic ingredients, flavoring, fruit juice, etc. They desirably contain 0.1% to 10% "liquid sweetener composition" in this invention as a solid content and have the quality of sweetness and sharpness equivalent to carbonated drinks containing 0.1% to 10% high-fructose syrup as a solid content with 90% or more fructose.

0.001 to 0.007 weight percent of high-intensity sweetener can be added to these "soft drinks," "sports drinks" and "carbonated drinks." Any "high-intensity sweeteners" are acceptable as long as they are suitable for drinking, such as sucralose for example.

### [Working examples]

This invention is explained in detail using working examples in the following, while it is not limited to these working examples.

### (Working example 1)

The liquid sweetener composition 1 was produced by agitating and mixing 75.0kg of fructose-glucose syrup (produced by Japan Corn Starch, Co., Ltd.; HFM-75; water content: 24.5%) and 25.0kg of high-fructose syrup (produced by Japan Corn Starch, Co., Ltd.; HFS-95; water content: 24.5%).

### (Working example 2)

The liquid sweetener composition 2 was produced by agitating and mixing 62.5kg of fructose-glucose syrup (produced by Japan Corn Starch, Co., Ltd.; HFM-75; water content: 24.5%) and 37.5kg of high-fructose syrup (produced by Japan Corn Starch, Co., Ltd.; HFS-95; water content: 24.5%).

### (Working example 3)

The liquid sweetener composition 3 was produced by agitating and mixing 50.0kg of fructose-glucose syrup (produced by Japan Corn Starch, Co., Ltd.; HFM-75; water content: 24.5%) and 50.0kg of high-fructose syrup (produced by Japan Corn Starch, Co., Ltd.; HFS-95; water content: 24.5%).

### (Reference example 4)

The liquid sweetener composition 4 was produced by agitating and mixing 37.5kg of fructose-glucose syrup (produced by Japan Corn Starch, Co., Ltd.; HFM-75; water content: 24.5%) and 62.5kg of high-fructose syrup (produced by Japan Corn Starch, Co., Ltd.; HFS-95; water content: 24.5%).

Sugar composition of the ingredients was measured in regards to each liquid sweetener composition produced in the above working examples 1 to 3 and reference example 4 , and the composition obtained from each compounding ratio (%), the proportion of fructose, glucose and reducing sugar other than fructose and glucose, and water content (weight %) were indicated in Table 1.

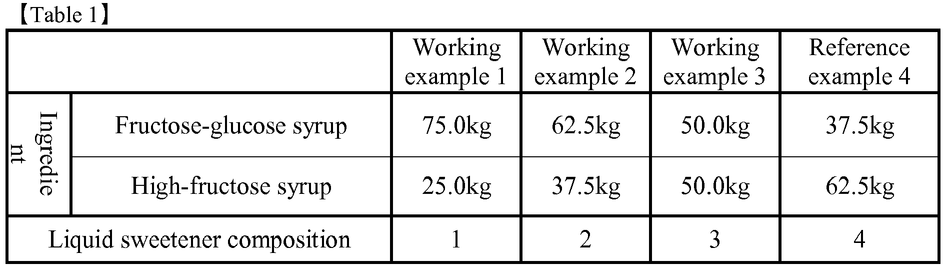

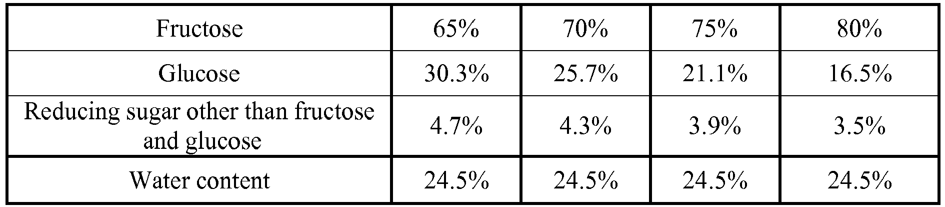

### (Working example 5)

The liquid sweetener composition 5 was produced by agitating and mixing 78.652kg of fructose-glucose syrup (produced by Japan Corn Starch, Co., Ltd.; HFM-75; water content: 24.5%), 16.123kg of crystalline fructose (produced by Tate & Lyle; 99.97% fructose) and 5.225kg of purified water.

### (Working example 6)

The liquid sweetener composition 6 was produced by agitating and mixing 67.416kg of fructose-glucose syrup (produced by Japan Corn Starch, Co., Ltd.; HFM-75; water content: 24.5%), 24.609kg of crystalline fructose (produced by Tate & Lyle; 99.97% fructose) and 7.975kg of purified water.

### (Working example 7)

The liquid sweetener composition 7 was produced by agitating and mixing 56.180kg of fructose-glucose syrup (produced by Japan Corn Starch, Co., Ltd.; HFM-75; water content: 24.5%), 33.094kg of crystalline fructose (produced by Tate & Lyle; 99.97% fructose) and 10.726kg of purified water.

### (Reference example 8)

The liquid sweetener composition 8 was produced by agitating and mixing 44.944kg of fructose-glucose syrup (produced by Japan Corn Starch, Co., Ltd.; HFM-75; water content: 24.5%), 41.580kg of crystalline fructose (produced by Tate & Lyle; 99.97% fructose) and 13.476kg of purified water.

Sugar composition of the ingredients was measured in regards to each liquid sweetener composition produced in the above working examples 5 to 7 and reference example 8; and the composition obtained from each compounding ratio (%), the proportion of fructose, glucose and reducing sugar other than fructose and glucose, and water content (weight %) were indicated in Table 2.

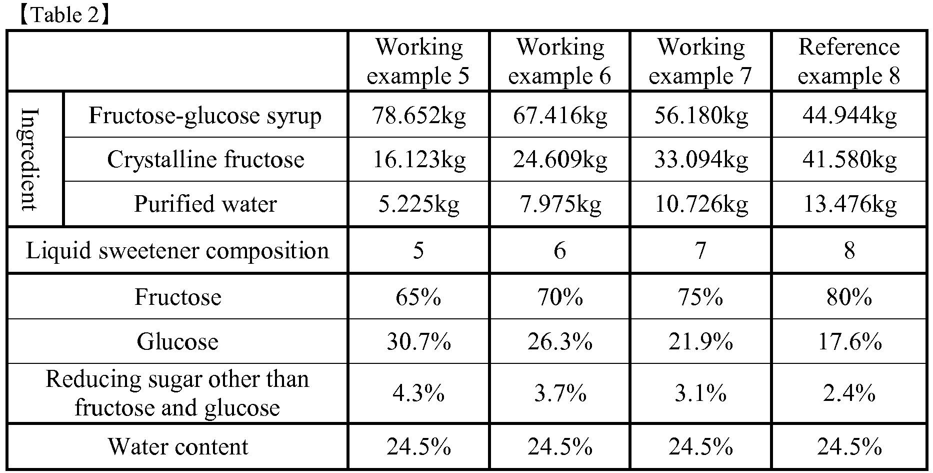

### (Working examples 9-11 and reference example 12)

26.49g of liquid sweetener compositions 1 to 4 produced in the same way as the working examples 1 to 3 and reference example 4 in the above were respectively mixed with 173.51g of purified water, and water solution containing 10% of the mixture as a solid content was prescribed at the mixing ratio indicated in Table 3.

### <Comparative testing 1>

Sensory evaluation was conducted in regards to the water solution prescribed in the working examples 9 to 11 and reference example 12 as well as to the water solution prescribed in the following comparative examples 1 to 3, to compare the quality of sweetness, sharpness, etc. Cost advantages in comparison with granulated sugar (sugar) were also evaluated.

### (Comparative example 1)

20.01g of granulated sugar (produced by Pearl Ace Corporation) was mixed with 179.99g of purified water, and the water solution containing 10% of the mixture as a solid content was prescribed at the mixing ratio indicated in Table 3.

### (Comparative example 2)

26.49g of fructose-glucose syrup (produced by Japan Corn Starch Co., Ltd.; HFM-75; water content: 24.5%) was mixed with 173.51g of purified water, and the water solution containing 10% of the mixture as a solid content was prescribed at the mixing ratio indicated in Table 3.

### (Comparative example 3)

26.49g of high-fructose syrup (produced by Japan Corn Starch Co., Ltd.; HFS-95; water content: 24.5%) was mixed with 173.51g of purified water, and the water solution containing 10% of the mixture as a solid content was prescribed at the mixing ratio indicated in Table 3.

### <Sensory evaluation>

In regards to each of the following evaluation items from 1 to 4, each of five panelists gave a score of either 0, 1, 2, 3, 4 or 5, with "0" being the closest to the water solution containing granulated sugar in the comparative example 1 and "5" being the closest to the water solution containing high-fructose syrup in the comparative example 3. "-" was given if the average score of five people was less than 1, "x" in the case of 1 or higher and less than 2, "Δ" in the case of 2 of higher and less than 3, "○" in the case of 3 or higher and less than 4, and "⊚" in the case of 4 or higher.

### <Evaluation items>

1. Development speed of sweetness: 0 (slow: sugar) - 5 (fast: high-fructose syrup)
2. Peak of sweetness: 0 (low: sugar) - 5 (high: high-fructose syrup)
3. Duration of highest level of sweetness: 0 (long: sugar) - 5 (short: high-fructose syrup)
4. Sharpness: 0 (poor: sugar) - 5 (good: high-fructose syrup)

### <Evaluation of cost advantages>

With 1 for granulated sugar, 0.8 to 0.95 for high-fructose syrup, 0.7 to 0.85 for isomerized syrup (70% sugar content), and 0.65 to 0.8 for isomerized syrup (55% sugar content), "⊚" was given in the case that the price is inexpensive and cost advantages are large (very significant), followed by "○" (significant), "Δ" (slightly significant), and "×" (insignificant), depending on the blending ratio of ingredients.

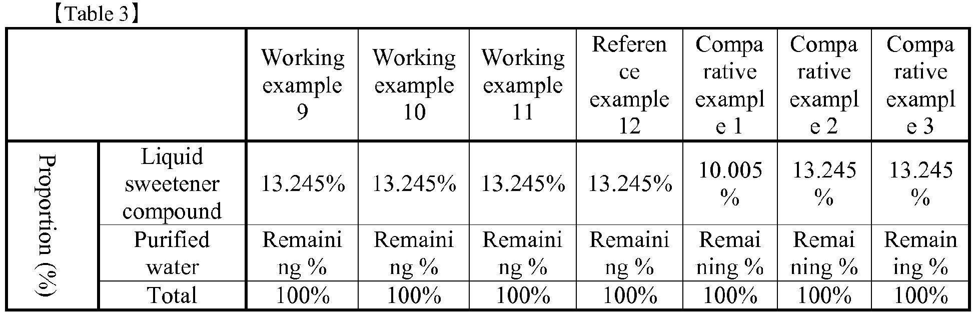

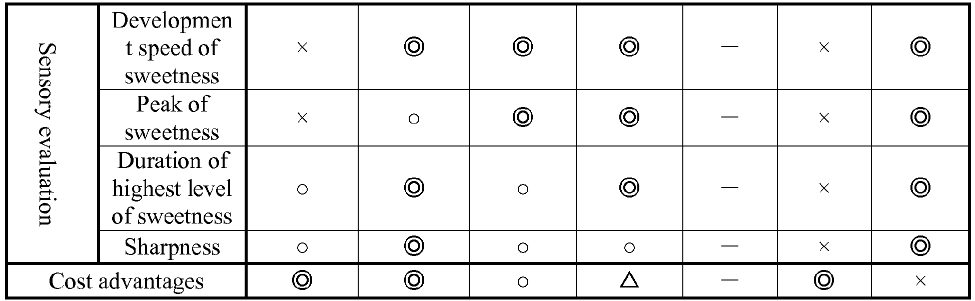

As a result, the water solution containing granulated sugar in the comparative example 1 was slow in (1) development speed of sweetness, low in (2) peak of sweetness, long in (3) duration of highest level of sweetness and poor in (4) sharpness as indicated in Table 3; therefore it was difficult to taste a cool sensation.

The water solution containing fructose-glucose syrup in the comparative example 2 was better than the comparative example 1 in terms of (1) development speed of sweetness and (4) sharpness; therefore it was slightly easy to taste a cool sensation.

The water solution containing high-fructose syrup in the comparative example 3 was faster in (1) development speed of sweetness, higher in (2) peak of sweetness, shorter in (3) duration of highest level of sweetness, and much better in (4) sharpness than the water solution in the comparative examples 1 and 2; therefore a cool sensation was strongly tasted. However, the duration of highest level of sweetness was shorter than the water solution in the comparative examples 1 and 2, with a tendency of slight lack in richness or rich flavor.

The water solution in the working example 9 was faster in (1) development speed of sweetness than the granulated sugar in the comparative example 1, long in (3) duration of highest level of sweetness and good in (4) sharpness; therefore a cool sensation and rich flavor was tasted. However, it was low in (2) peak of sweetness, falling short in sweetness. Cost advantages in comparison with granulated sugar were also large.

The water solution in the working example 10 was close to the water solution containing high-fructose syrup in the comparative example 3 in terms of (1) development speed of sweetness and (4) sharpness, and (2) peak of sweetness was also higher than the water solution in the working example 9; therefore a cool sensation was strongly tasted. Since (3) duration of highest level of sweetness was slightly long, richness was tasted slightly more than the water solution in the comparative example 3. Cost advantages in comparison with granulated sugar were slightly smaller than the water solution in the working example 9, although they were sufficient.

The water solution in the working example 11 had the same tendency as the water solution in the comparative example 3 in terms of (1) development speed of sweetness and (2) peak of sweetness, while it was not satisfactory because (4) sharpness was poor.

The water solution in the reference example 12 was better than the working example 9 in terms of (1) development speed of sweetness, (2) peak of sweetness and (3) duration of highest level of sweetness; and a cool sensation was tasted. Cost advantages in comparison with granulated sugar were smaller than the water solution in the working examples 9 to 11.

### (Working examples 13-15 and reference example 16)

26.49g of the liquid sweetener compositions 5 to 8 produced in the same way as the above working examples 5 to 7 and reference example 8 were respectively mixed with 173.51g of purified water, and the water solution containing 10% of the mixture as a solid content was prescribed at the mixing ratio indicated in Table 4.

### <Comparative testing 2>

Sensory evaluation was conducted in regards to the water solution prescribed in the working examples 13 to 15 and reference example 16 as well as to the water solution prescribed in the above comparative examples 1 and 2 and the following comparative example 4 in the same way as the comparative testing 1, to compare the quality of sweetness, sharpness, etc.

### (Comparative example 4)

20.01g of crystalline fructose liquid (produced by Tate & Lyle; 99.97% fructose) was mixed with 179.99g of purified water, and the water solution containing 10% of the mixture as a solid content was prescribed at the mixing ratio indicated in Table 4.

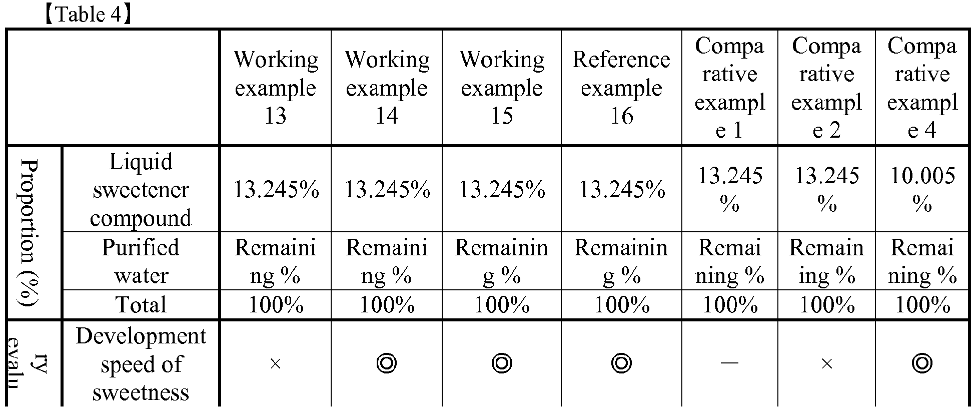

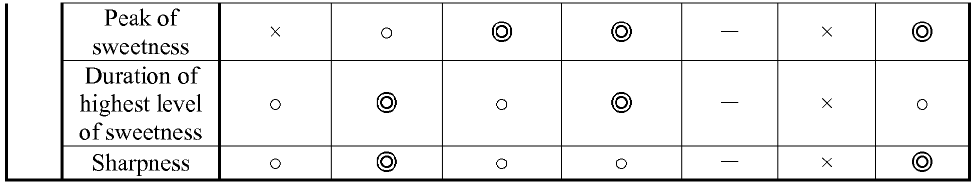

As a result, the water solution containing crystalline fructose liquid in the comparative example 4 was very good in terms of (1) development speed of sweetness, (2) peak of sweetness and (4) sharpness similar to the water solution containing high-fructose syrup in the comparative example 3, as indicated in Table 4; and a cool sensation was strongly tasted.

The water solution in the working example 13 was better than the water solution containing granulated sugar in the comparative example 1 in terms of (1) development speed of sweetness, was long in (3) duration of highest level of sweetness and had (4) sharpness similar to the water solution in the working example 9; therefore a cool sensation and rich flavor was tasted.

The water solution in the working example 14 was close to the water solution containing crystalline fructose liquid in the comparative example 4 in terms of (1) development speed of sweetness and (4) sharpness similar to the water solution in the working example 10 and (3) peak of sweetness was also higher than the water solution in the working example 9; therefore a cool sensation was strongly tasted. Since (3) duration of highest level of sweetness was slightly long, richness was slightly tasted compared with the water solution containing crystalline fructose liquid in the comparative example 4.

The water solution in the working example 15 had a tendency similar to the water solution containing crystalline fructose liquid in the comparative example 4 in terms of (1) development speed of sweetness and (3) peak of sweetness similar to the water solution in the working example 11, while it was not satisfactory because (4) sharpness was poor.

The water solution in the reference example 16 was better than the water solution in the working examples 9 and 13 in terms of (1) development speed of sweetness, (4) sharpness and (3) peak of sweetness similar to the water solution in the reference example 12; and a cool sensation was strongly tasted.

When the results of the comparative testing 1 and 2 were compared, high-fructose syrup was used as an ingredient of fructose in the working examples 9 to 11 and reference example 12 and crystalline fructose was used in the working examples 13 to 15 and reference example 16. These types of syrup have different syrup compositions other than fructose; however differences were not recognized in sweetness if the volume of fructose was equivalent (working examples 9 and 13; working examples 10 and 14; working examples 11 and 15; and working examples 2 and reference example 16). According to these results, the importance of the proportion of fructose in the liquid sweetener composition used was confirmed in terms of (1) development speed of sweetness and (4) sharpness.

### (Working examples 17-19 and reference example 20)

Sports drinks consisting of 11.92g of liquid sweetener compositions 1 to 4 produced in the same way as the above working examples 1 to 3 and reference example 4, respectively, 0.3g of citric acid, 0.08g of salt, 0.00384g of sucralose, 0.2g of grapefruit flavor, and the remaining percentages of purified water were prescribed at the mixing ratio indicated in Table 5-1.

### <Comparative testing 3>

In regards to sports drinks in the working examples 17 to 19 and reference example 20 as well as for sports drinks prescribed in the following comparative examples 5 to 7 and reference example 8, sensory evaluation was conducted in the same way as the comparative testing 1 to compare the quality of sweetness, sharpness, etc., except that "0" was given if they were close to sports drinks containing granulated sugar in the comparative example 5. Along with this, sensory evaluation was also conducted in regards to the following evaluation items 5 and 6. "0" was given if richness was close to water and "5" if close to sports drinks containing granulated sugar in the comparative example 5.

### <Evaluation items>

5. Compatibility with flavor: 0 (poor: sugar) - 5 (good: high-fructose syrup)
6. Richness: 0 (poor: water) - 5 (strong: sugar)

### (Comparative example 5)

Sports drinks consisting of 9.00g of granulated sugar (produced by Pearl Ace Corporation), 0.3g of citric acid, 0.08g of salt, 0.00384g of sucralose, 0.2g of grapefruit flavor, and the remaining percentages of purified water were prescribed at the mixing ratio indicated in Table 5-2.

### (Comparative example 6)

Sports drinks consisting of 11.92g of fructose-glucose syrup (produced by Japan Corn Starch, Co., Ltd.; HFM-75; 24.5% water content), 0.3g of citric acid, 0.08g of salt, 0.00384g of sucralose, 0.2g of grapefruit flavor, and the remaining percentages of purified water were prescribed at the mixing ratio indicated in Table 5-2.

### (Comparative example 7)

Sports drinks consisting of 11.92g of high-fructose syrup (produced by Japan Corn Starch, Co., Ltd.; HFS-95; 24.5% water content), 0.3g of citric acid, 0.08g of salt, 0.00384g of sucralose, 0.2g of grapefruit flavor, and the remaining percentages of purified water were prescribed at the mixing ratio indicated in Table 5-2.

### (Comparative example 8)

Sports drinks consisting of 9.00g of crystalline fructose liquid (produced by Tate & Lyle; 99.97% fructose), 0.3g of citric acid, 0.08g of salt, 0.00384g of sucralose, 0.2g of grapefruit flavor, and the remaining percentages of purified water were prescribed at the mixing ratio indicated in Table 5-2.

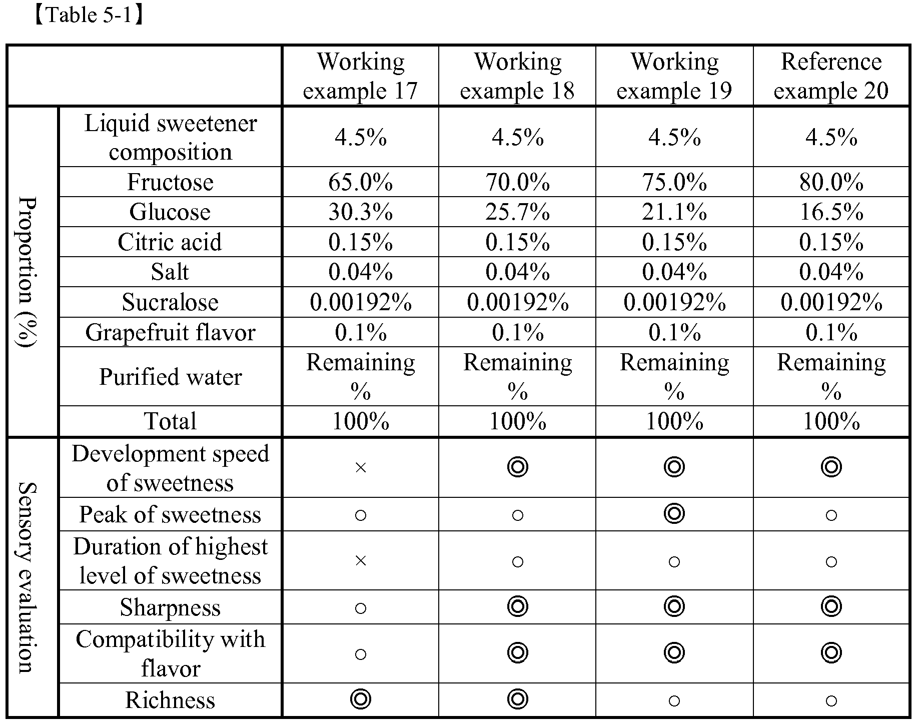

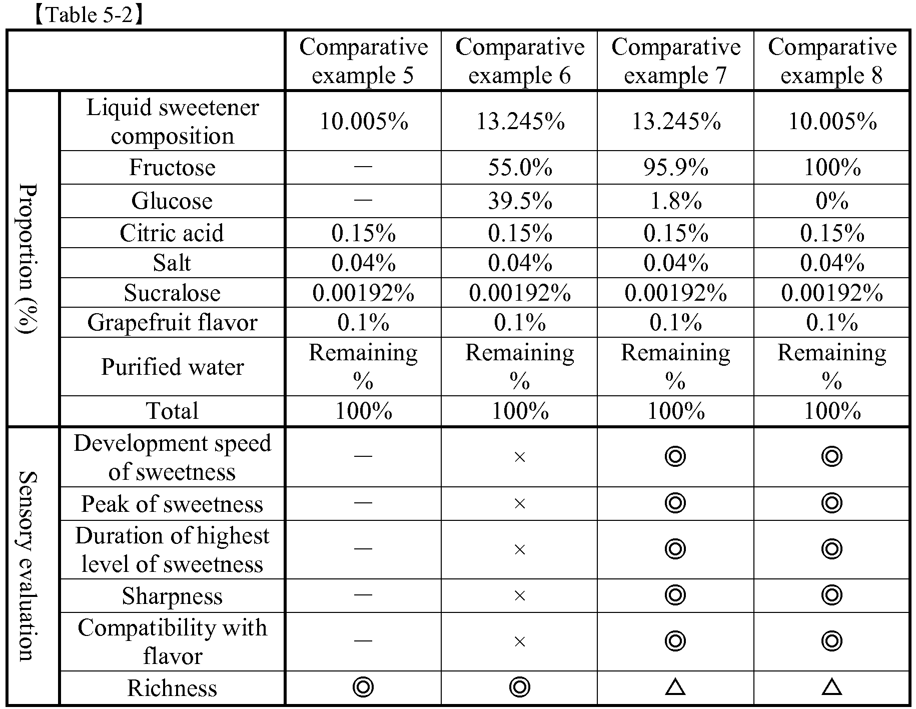

As a result, sports drinks containing granulated sugar in the comparative example 5 was slow in (1) development speed of sweetness, low in (2) peak of sweetness, long in (3) duration of highest level of sweetness, and poor in (4) sharpness as indicated in Table 5-2; and it was difficult to taste a cool sensation. In addition, sweetness and flavor was tasted at the same time and flavor release was poor. Also, since sucralose, a high-intensity sweetener added as a sweetener, has the quality of sweetness close to sugar, sharpness was poor compared with the water solution containing granulated sugar in the comparative example 1 and it was difficult to taste a cool sensation.

Sports drinks containing fructose-glucose syrup in the comparative example 6 was better than the water solution containing granulated sugar in the comparative example 1 in terms of (1) development speed of sweetness and (4) sharpness; and a cool sensation was slightly easier to be tasted. In addition, sweetness and briskness of grapefruits was tasted at the same time and flavor release was poor. Also, since they have a pattern of sweetness similar to sucralose, a high-intensity sweetener, a cool sensation was slightly easier to be tasted than sports drinks containing granulated sugar in the comparative example 5.

Sports drinks containing high-fructose syrup in the comparative example 7 was much better than sports drinks in the comparative examples 5 and 6 in terms of (1) development speed of sweetness, (2) peak of sweetness and (4) sharpness; and a cool sensation was tasted. In addition, sports drinks in the comparative example 7 tended to have slightly longer (3) duration of highest level of sweetness by adding sucralose, a high-intensity sweetener; therefore richness was slightly tasted. For sports drinks in the comparative example 7, briskness of grapefruits was tasted once sharpness kicked in; therefore flavor release was good. Aftertaste extended due to the addition of sucralose and sharpness was tasted slightly weaker than the water solution containing high-fructose syrup in the comparative example 3; however they are tasty with a cool sensation and rich flavor.

Sports drinks containing crystalline fructose liquid in the comparative example 8 had a similar quality of sweetness to sports drinks in the comparative example 7, and there was no major difference in the quality of sweetness whether fructose is derived from crystalline fructose or high-fructose syrup. Compatibility with flavor was also similar to the comparative example 7.

Sports drinks in the working example 17 were fast in (1) development speed of sweetness, good in (4) sharpness and long in (3) duration of highest level of sweetness; therefore a cool sensation and rich flavor were tasted. Although (2) peak of sweetness was low, aftertaste was not sustained by sucralose, a high-intensity sweetener, and it was easy to taste sharpness and cool sensation. Briskness of grapefruits overlapped sharpness of sweetness; therefore flavor release was good. (6) Richness was also sufficient.

Sports drinks in the working example 18 were close to sports drinks in the comparative examples 7 and 8 in terms of (1) development speed of sweetness and (4) sharpness, and (2) peak of sweetness was better than sports drinks in the working example 17; therefore a cool sensation was strongly tasted. Also, since duration of highest level of sweetness was slightly long, richness was tasted and at the same time aftertaste was not sustained by sucralose. They were tasty with slightly strong sharpness and cool sensation compared with sports drinks in comparative examples 7 and 8. Taste of strong sharpness and briskness of grapefruits also brought a cool sensation. (6) Richness was also sufficient.

Sports drinks in the working example 19 was better than sports drinks in the working example 18 in terms of (1) development speed of sweetness, (2) peak of sweetness and (4) sharpness, and a cool sensation was strongly tasted. (3) Duration of highest level of sweetness was slightly long and and richness was tasted, while at the same time, aftertaste was not sustained by sucralose. They were tasty with a slightly stronger sharpness and cool sensation than sports drinks in the working example 18. A cool sensation was tasted from strong sharpness along with briskness of grapefruits, without leading to loss of interest by continuing on drinking in comparison with sports drinks compared with the comparative examples 7 and 8; therefore they were easy to drink. (6) Richness was also good.

Sports drinks in the reference example 20 was better than sports drinks in the working example 18 in terms of (1) development speed of sweetness, (4) sharpness and (3) peak of sweetness, and a cool sensation was strongly tasted. Sweetness was sustained slightly longer due to addition of sucralose, a high-intensity sweetener, with a tendency to slightly extend the duration of highest level of sweetness. Aftertaste was slightly sustained by addition of sucralose and sharpness was slightly weak; however they were tasty with a cool sensation and rich flavor. Since briskness of grapefruits overlapped sharpness of sweetness, flavor release was good. (6) Richness was also good.

The amount of fructose was adjusted in sports drinks in the working examples 17 to 19 and reference example 20, while sustained aftertaste due to sucralose, peak of sweetness, duration of highest level of sweetness, compatibility with flavor, sharpness, etc. were related to the amount of fructose. Therefore, it was successfully confirmed from these results that the proportion of fructose in a liquid sweetener composition used is important.

### (Working examples 21-23 and reference example 24)

Carbonated drinks consisting of 26.49g of liquid sweetener compositions 1 to 4 produced in the same way as the above working examples 1 to 3 and reference example 4, respectively, 0.2g of citric acid, 0.2g of cider flavor, and carbonated drinks consisting of the remaining percentages of carbonated water were prescribed at the mixing ratio indicated in Table 6-1.

### <Comparative testing 3>

In regards to the carbonated drinks prescribed in the working examples 21 to 23 and reference example 24 as well as to the carbonated drinks prescribed in the following comparative examples 9 to 12, sensory evaluation was conducted in terms of (1) development speed of sweetness, (4) sharpness and (5) compatibility with flavor in the same way as the comparative testing 1 and 2, except that "0" was given if they were close to carbonated drinks containing granulated sugar in the comparative example 9. In regards to (6) richness, sensory evaluation was conducted with "0" being close to water and "5" being close to carbonated drinks containing granulated sugar in the comparative example 5.

### (Comparative example 9)

20.00g of granulated sugar (produced by Pearl Ace Corporation), 0.2g of citric acid, 0.2g of cider flavor and carbonated drinks consisting of the remaining percentages of carbonated water were prescribed at the mixing ratio indicated in Table 6.2.

### (Comparative example 10)

26.49g of fructose-glucose syrup (produced by Japan Corn Starch Co., Ltd.; HFM-75; 24.5% water content), 0.2g of citric acid, 0.2g of cider flavor and carbonated drinks consisting of the remaining percentages of carbonated water were prescribed at the mixing ratio indicated in Table 6.2.

### (Comparative example 11)

26.49g of high-fructose syrup (produced by Japan Corn Starch Co., Ltd.; HFS-95; 24.5% water content), 0.2g of citric acid, 0.2g of cider flavor and carbonated drinks consisting of the remaining percentages of carbonated water were prescribed at the mixing ratio indicated in Table 6.2.

### (Comparative example 12)

20.00g of crystalline fructose liquid (produced by Tate & Lyle; 99.97% fructose), 0.2g of citric acid, 0.2g of cider flavor and carbonated drinks consisting of the remaining percentages of carbonated water were prescribed at the mixing ratio indicated in Table 6.2.

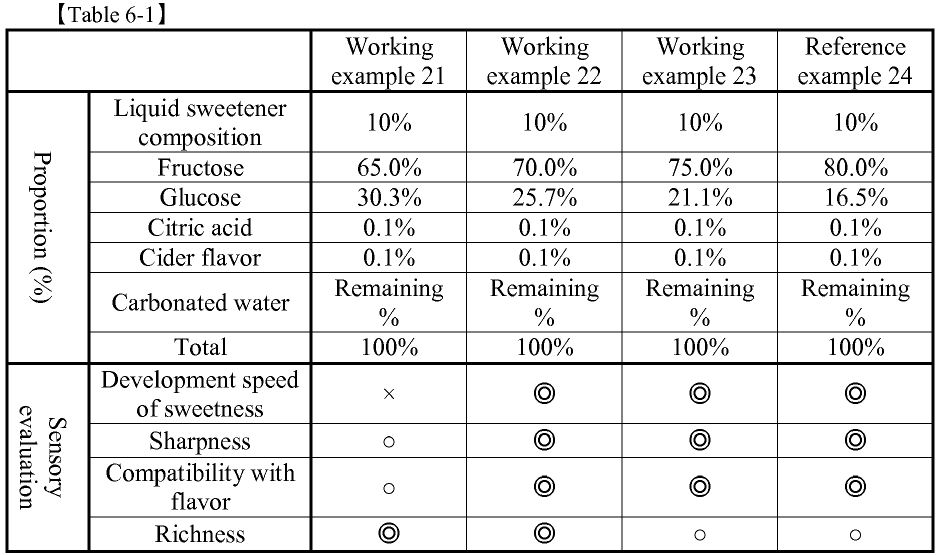

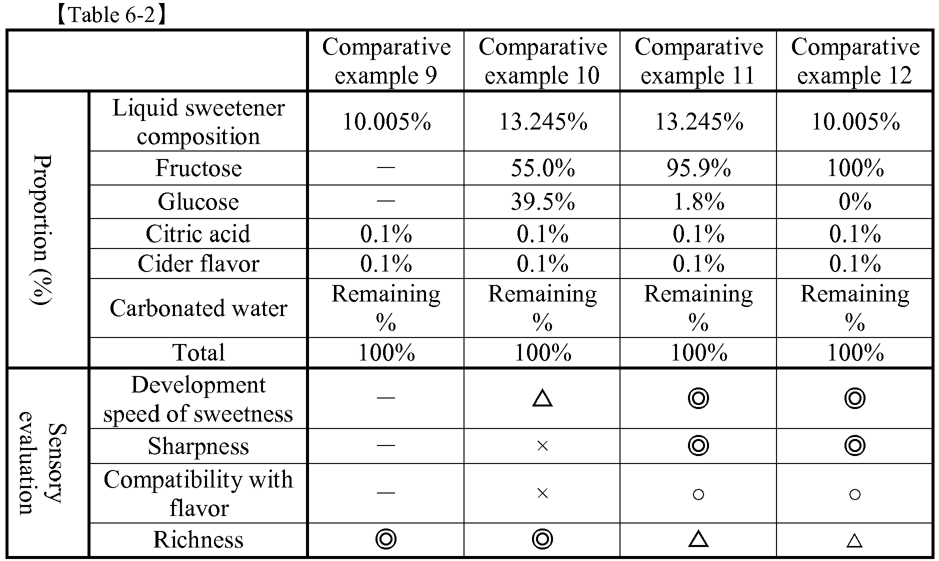

As a result, carbonated drinks containing granulated sugar in the comparative example 9 was slow in (1) development speed of sweetness and poor in (2) sharpness as indicated in Table 6-2; therefore it was difficult to taste a cool sensation. (4) Richness was easily tasted as if it was tasty cider from the old days.

Carbonated drinks containing fructose-glucose syrup in the comparative example 10 was better than the water solution containing granulated sugar in the comparative example 1 in terms of (1) development speed of sweetness and (2) sharpness; therefore a cool sensation was tasted more easily. Furthermore, since sweetness and flavor was tasted at the same time, they tasted less like cider with a nasty aftertaste.

Carbonated drinks containing high-fructose syrup in the comparative example 11 were much better than carbonated drinks in comparative examples 9 and 10 in terms of (1) development speed of sweetness and (2) sharpness; therefore a cool sensation was tasted. For carbonated drinks in the comparative example 11, briskness of cider was tasted once sharpness kicked in; therefore flavor release was good. Richness was weak with refreshing taste, like cider with less rich flavor.

Carbonated drinks containing crystalline fructose liquid in the comparative example 12 had a similar quality of sweetness to carbonated drinks in the comparative example 11, and there was no major difference in the quality of sweetness whether fructose is derived from crystalline fructose or high-fructose syrup. Compatibility with flavor was also similar to the comparative example 11.

Carbonated drinks in the working example 21 were good in (1) development speed of sweetness and (2) sharpness; therefore a cool sensation and rich flavor was tasted. Since briskness of cider overlapped sharpness of sweetness, flavor release was good. (4) Richness was also sufficient.

Carbonated drinks in the working example 22 were close to carbonated drinks in the comparative examples 11 and 12 in terms of (1) development speed of sweetness and (2) sharpness, and a cool sensation was strongly tasted. They were tasty with a slightly longer duration of highest level of sweetness leaving richness, and at the same time sharpness and cool sensation were tasted slightly stronger than carbonated drinks in the comparative examples 11 and 12. A cool sensation was tasted from strong sharpness along with briskness of cider with richness at the same level as the carbonated drinks in the comparative examples 9 and 10, without leading to loss of interest by continuing on drinking in comparison with carbonated drinks in the comparative examples 11 and 12; therefore they had rich flavor and were easy to drink.

Carbonated drinks in the working example 23 were better than carbonated drinks in the working example 22 in terms of (1) development speed of sweetness and (2) sharpness; therefore a cool sensation was strongly tasted. They were tasty with slightly long duration of highest level of sweetness leaving richness, and at the same time sharpness and cool sensation were tasted slightly stronger than carbonated drinks in the working example 22.

A cool sensation was tasted from strong sharpness along with briskness of cider, without leading to loss of interest by continuing on drinking in comparison with carbonated drinks in the comparative examples 11 and 12; therefore they were easy to drink.

Carbonated drinks in the reference example 24 were better than carbonated drinks in the working example 22 in terms of (1) development speed of sweetness and (2) sharpness; therefore a cool sensation was strongly tasted. Since briskness of cider overlapped sharpness of sweetness, flavor release was good with a cool sensation and rich flavor.

The amount of fructose was adjusted in carbonated drinks in the working examples 21 to 24, while development of sweetness, peak of sweetness, duration of highest level of sweetness, compatibility with flavor, sharpness, richness, etc. were related to the amount of fructose.

Therefore, it was successfully confirmed from these results that the proportion of fructose in a liquid sweetener composition used is important.

### [Industrial applicability]

This invention has a significant economic meaning. Its attractiveness to the food industry is immeasurable since it can reproduce the quality of sweetness and sharpness equivalent to high-fructose syrup and realize cost reduction. It is possible to stably supply more fructose-glucose syrup with 55% fructose content which is in heavy demand, by reducing the supply of high-fructose syrup; therefore it is invaluable in the food industry.

## Claims

1. Liquid sweetener composition that satisfies (1) and (2) in the following:
(1) contains 67.5% or more and 77.5% or less fructose, 10% or more and 35% or less glucose, and 1% or more and 5% or less reducing sugar other than fructose and glucose in terms of weight ratio (anhydrous basis);
(2) contains 15 to 30 weight percent of water content;
wherein the reducing sugar other than fructose and glucose is selected from maltose, maltotriose and maltotetraose.

2. A soft drink that contains 0.1% to 10% liquid sweetener composition according to claim 1 as a solid content.

3. A soft drink according to claim 2 that additionally contains 0.001 to 0.007 weight percent of high-intensity sweetener.

4. A sports drink that contains 0.1% to 10% liquid sweetener composition according to claim 1 as a solid content.

5. A sports drink according to claim 4 that additionally contain 0.001 to 0.007 weight percent of high-intensity sweetener.

6. A carbonated drink that contains 0.1% to 10% liquid sweetener composition according to claim 1 as a solid content.

7. A carbonated drink according to claim 6 that additionally contains 0.001 to 0.007 weight percent of high-intensity sweetener.

## Patentansprüche

1. Flüssige Süßstoffzusammensetzung, die (1) und (2) wie folgt erfüllt:
(1) enthält 67,5 % oder mehr und 77,5 % oder weniger Fructose, 10 % oder mehr und 35 % oder weniger Glucose und 1 % oder mehr und 5 % oder weniger anderen reduzierenden Zucker als Fructose und Glucose im Hinblick auf Gewichtsverhältnis (wasserfreie Basis);
(2) enthält 15 bis 30 Gew.-% Wasser;
wobei der andere reduzierende Zucker als Fructose und Glucose aus Maltose, Maltotriose und Maltotetraose ausgewählt ist.

2. Softdrink, der 0,1 % bis 10 % flüssige Süßstoffzusammensetzung nach Anspruch 1 als Festkörperanteil enthält.

3. Softdrink nach Anspruch 2, der zusätzlich 0,001 bis 0,007 Gew.-% Hochintensitätssüßstoff enthält.

4. Sportgetränk, das 0,1 % bis 10 % flüssige Süßstoffzusammensetzung nach Anspruch 1 als Festkörperanteil enthält.

5. Sportgetränk nach Anspruch 4, das zusätzlich 0,001 bis 0,007 Gew.-% Hochintensitätssüßstoff enthält.

6. Kohlensäurehaltiges Getränk, das 0,1 % bis 10 % flüssige Süßstoffzusammensetzung gemäß Anspruch 1 als Festkörperanteil enthält.

7. Kohlensäurehaltiges Getränk nach Anspruch 6, das zusätzlich 0,001 bis 0,007 Gew.-% Hochintensitätssüßstoff enthält.

## Revendications

1. Composition édulcorante liquide qui satisfait à (1) et (2) en ce qui suit :
(1) contient 67,5 % ou plus et 77,5 % ou moins de fructose, 10 % ou plus et 35 % ou moins de glucose et 1 % ou plus et 5 % ou moins de sucre réducteur autre que fructose ou glucose en termes de rapport pondéral (base anhydre) ;
(2) contient 15 à 30 pour cent en poids de teneur en eau ;
dans laquelle le sucre réducteur autre que fructose et glucose est sélectionné parmi le maltose, maltotriose et maltotétraose.

2. Boisson non alcoolisée qui contient de 0,1 % à 10 % d'une composition édulcorante liquide selon la revendication 1 en tant que teneur en solide.

3. Boisson non alcoolisée selon la revendication 2, qui contient en plus de 0,001 à 0,007 pour cent en poids d'un édulcorant à haute intensité.

4. Boisson énergétique qui contient de 0,1 % à 10 % d'une composition édulcorante liquide selon la revendication 1 en tant que teneur en solide.

5. Boisson énergétique selon la revendication 4, qui contient en plus de 0,001 à 0,007 pour cent en poids d'un édulcorant à haute intensité.

6. Boisson gazeuse qui contient de 0,1 % à 10 % d'une composition édulcorante liquide selon la revendication 1 en tant que teneur en solide.

7. Boisson gazeuse selon la revendication 6, qui contient en plus de 0,001 à 0,007 pour cent en poids d'un édulcorant à haute intensité.
